Europäisches Patentamt

European Patent Office

Office européen des brevets

(19)

(11) Publication number: **0 414 399 B1**

# EUROPEAN PATENT SPECIFICATION

(45) Date of publication of patent specification: **08.11.95**

(51) Int. Cl.⁶: **C01B 3/00**, C01B 4/00, G21B 1/00

(21) Application number: **90308602.3**

(22) Date of filing: **03.08.90**

Divisional application 93111362.5 filed on 15/07/93.

(54) **Process and apparatus for storing hydrogen and generating heat energy.**

(30) Priority: **04.08.89 JP 203035/89**
**03.08.90 JP 206997/90**

(43) Date of publication of application:
**27.02.91 Bulletin 91/09**

(45) Publication of the grant of the patent:
**08.11.95 Bulletin 95/45**

(84) Designated Contracting States:
**DE FR GB**

(56) References cited:
**EP-A- 0 393 465**
**EP-A- 0 394 980**
**EP-A- 0 395 066**
**WO-A-91/01036**

**Fusion Technology vol. 16, no. 2, September 1989, LA GRANGE PARK, ILLI, USpages 251 - 253; D. N. Ruzic et al.: "A NOVEL APPARA- TUS TO INVESTIGATE THEPOSSIBILITY OF PLASMA-ASSISTED COLD FUSION"**

(73) Proprietor: **CANON KABUSHIKI KAISHA**
**30-2, 3-chome, Shimomaruko,**
**Ohta-ku**
**Tokyo (JP)**

(72) Inventor: **Hasegawa, Mitsutoshi, c/o Canon Kabushiki Kaisha**
**30-2, 3-chome, Shimomaruko,**
**Ohta-ku**
**Tokyo (JP)**
Inventor: **Hosono, Nagao, c/o Canon Kabushiki Kaisha**
**30-2, 3-chome, Shimomaruko,**
**Ohta-ku**
**Tokyo (JP)**

(74) Representative: **Beresford, Keith Denis Lewis et al**
**BERESFORD & Co.**
**2-5 Warwick Court**
**High Holborn**
**London WC1R 5DJ (GB)**

## Description

The present invention relates to an apparatus for generating heat energy in which deuterium is stored in a solid-state storage member.

It has been contemplated to switch the energy supply source from fossil fuels such as petroleum, etc. to such energy supply sources as atomic energy, solar energy, etc., or furthermore to energy supply sources such as fast breeding, nuclear fusion reaction, etc. In order to effectively and conveniently utilize these new energy sources, it has been contemplated to utilize deuterium as a secondary energy source, because the raw material is water. Use of deuterium results in reduced environmental pollution.

Recently, attention has been paid to solid state storage materials as a means of storing deuterium because of their capabilities of storing deuterium at a density equal to, or higher than that of liquid deuterium.

Processes so far proposed for storing deuterium in solid state storage materials include a process which comprises filling a vessel containing a solid-state storage member with a deuterium gas under a few to a few tens of atmospheres and storing deuterium by utilizing the solid solution equilibrium state of a metal deuteride.

Nuclear fusion has been contemplated as a new energy source. According to one nuclear fusion process so far proposed, a gas mixture of deuterium $D_2$ and tritium $T_2$ is used, a high temperature plasma of deuterium is maintained by the action of a magnetic field, and the gas mixture of deuterium $D_2$ and tritium $T_2$ is compressed to a high density and subjected to reaction (inertial confinement) before the plasma is scattered. In order to confine and maintain the high temperature plasma for as long time as possible, a very large and expensive nuclear fusion apparatus, the Tokamak system (D-T reaction), is used.

Such a nuclear fusion apparatus, when used as an energy generation source, has the following problems. In the nuclear fusion apparatus of the Tokamak system, tritium used for the nuclear fusion reaction and an apparatus for occasioning the nuclear fusion are very expensive, a wide area is needed for installing the apparatus, and furthermore formation of high temperature plasma to occasion the nuclear fusion reaction brings about dangers.

Recently, it has been reported that a cold nuclear fusion reaction (D-D reaction) can be carried out by electrolysing a heavy water solution containing metal ions with a simple metal of Pd or Ti as a cathode. For example, in S. E. Jones et al, Nature 338 (1989) 737, "Observations of Cold Nuclear Fusion in Condensed Matter", neutrons of 2.5 MeV were detected during the electrolysis by measurement with a highly sensitive detector, proving that the nuclear fusion reaction took place to a very slight degree, though, by the generation of neutrons. A similar experiment was reported by Martin Fleischman & Stanley Pons in J. Electroanal. Chem., 261 (1989), 301-308. There is now renewed interest in the possibility of cold nuclear fusion.

The cold nuclear fusion process, just mentioned, is based on a nuclear fusion reaction occasioned by fusion of deuterium nuclei for deuterium stored in Pd or in Ti by electrolysis of heavy water solution with a Pd or Ti simple metal, which is capable of storing deuterium, used as a cathode.

As to a nuclear fusion reaction in a gas phase, it is reported that a large amount of neutrons was detected only by inserting a Ti rod as a hydrogen storing member into a deuterium gas at -150°C and occasion of nuclear fusion was confirmed thereby (ENEA Laboratory, April, 1989).

In the cold nuclear fusion process, where deuterium storage and nuclear fusion reaction is carried out by electrolysis of an electrolytic solution, bubbles of deuterium $D_2$ attach to the surface of Pd or Ti as a cathode in the process of electrolysis, because a heavy water solution containing metallic ions is used as an electrolytic solution. Thus, it is difficult to keep the state of the cathode surface constantly uniform, this resulting in a failure to carry out storage and reaction effectively. Furthermore deuterium is liberated at the cathode and oxygen is liberated at the anode, and the liberated generated deuterium and oxygen can react with each other violently, causing an explosion. Furthermore, because of the rise in the solution temperature due to the Joule heat generated from the electrolytic solution working as a resistor or an increase in the amount of gas discharged from the electrode, it is impossible to elevate the voltage to be applied to the electrode, and difficult to cool the storage member.

The heat energy available by the conventional method for generating the heat energy is not so much as to allow a practical application. The electric current passing through the electrolytic solution is comparatively large, for example, up to about 500 mA/cm$^2$ per electrode surface area, but the voltage applied thereto is low, for example, about 1 to about 30 volts. The voltage cannot be made higher, because the electric resistance of the electrolytic solution is low. Thus, even if the deuterium is occluded in the negative electrode constituted by the storage member, nuclear fusion does not take place with a sufficiently high probability.

2

In prior art nuclear fusion carried out by inserting a Ti rod as a storage member into a deuterium gas there are disadvantages that a low temperature such as -150°C is ordinarily required for storing large volume deuterium in the storage member, and also a complicated apparatus has been required for that purpose.

Recent proposals for conducting cold nuclear fusion using a solid-state deuterium storage member in a deuterium gas atmosphere are referred to below.

A method and an apparatus for generating heat energy is discussed in the following article: "A novel apparatus to investigate the possibility of plasma-assisted cold fusion", Ruzic, D.N. et al, Fusion Technology, Vol. 16 (Sept. 1989), pages 251-253. As there described a plasma is formed in an inner chamber between two palladium electrodes by a dc current/voltage limited supply. Also an additional high-current, low-voltage, dc supply is connected through a tungsten wire spot-welded to the centre of the cathode. After an initial breakdown discharge, a partial discharge is maintained while the pressure is decreased. Arcing, i.e. sporadic breakdown discharge can be observed to occur upon lowering of the pressure if the plasma current is too high. In the preferred method liquid $N_2$ cooling is employed so that high plasma current can be sustained without arcs developing. The method employed has in common with the method of the invention defined below the following steps:

providing a chamber having therein a pair of spaced electrodes which electrodes are so configured that electric field may be concentrated around at least one electrode thereof, and which one electrode constitutes a deuterium storage member;

admitting either deuterium gas, or a gaseous mixture predominantly of deuterium gas, into said chamber;

applying a first voltage between the electrodes to concentrate an electric field around the one electrode and thereby produce a sustained partial discharge whereby the deuterium gas is activated and activated deuterium is adsorbed by the one electrode.

Also, the apparatus has in common with the apparatus of this invention:

a chamber having a gas inlet and a gas outlet;

a pair of spaced electrodes which electrodes are so configured that electric field may be concentrated around at least one electrode thereof, and which one electrode constitutes a deuterium storage member; and

a first circuit means including a first voltage source connected to the electrodes for concentrating electric field around the one electrode and producing a sustained partial discharge between the electrodes.

Alternative method and apparatus are described in International patent application WO 91/01036. In this arrangement the storage member has the form of a cylindrical cathode and is located opposite an annular brush electrode as anode. The cathode and anode are located in a chamber filled with deuterium gas. A dc or pulsed unidirectional voltage is applied between the cathode and anode to maintain a corona discharge, i.e. a partial discharge. The cathode is made part of a capacitor structure the dielectric medium of which is the heat exchange fluid, an oil. The discharge voltage applied to the capacitor is chosen so that dielectric breakdown, i.e. breakdown discharge is suppressed to avoid overcharging. Other types of gas discharge are mentioned, including arc discharge and spark discharge, both examples of breakdown discharge, as alternative to corona discharge. Energy output is increased significantly by performing corona discharge using a pulsed high voltage source and discharging the capacitor by using a voltage supply operated pulsewise and intermittently with respect to the pulses of the high voltage source.

European patent application EP-A-0394980 also is mentioned. In the apparatus there described a gas discharge is produced between cathode and anode. It is reported that the effects of using ac current discharge, dc current discharge, and pulsed current discharge are equivalent.

European patent application EP-A-0393465 describes another apparatus arrangement using a cooled cathode storage member. The cathode is of smaller area than the anode and thus electric field concentration is afforded. A dc current gas discharge, i.e. a partial discharge, is produced between cathode and anode. Heat generation is controlled by applying a pulsed negative bias to the cathode.

The present invention provides alternative method and apparatus to the foregoing. It is intended to improve efficiency both in the storage of deuterium and in the performance of heat generation. Heat output may be controlled by simple apparatus modification.

The method of the present invention although similar to that method described in the aforementioned article is characterised by:

applying a pulsed second voltage between the electrodes, periodically, whereby a breakdown discharge is caused to occur in each period of the pulsed second voltage, alternate with the sustained partial discharge, whereby impulse waves are generated in the one electrode, and lattice intrusion of deuterium into interstices of the lattice structure of the one electrode is caused.

3

In the aforesaid method, heat output can be controlled by varying the interval (i.e. period) between application of the pulses causing breakdown discharge.

Each pulse aforesaid may be one of a succession of pulses in each interval. The number of pulses in each interval also can be changed as a means of controlling heat output.

The effect of breakdown discharge following partial discharge is to generate a shock wave in the cathode. Deuterium ions are thereby driven into the lattice structure of the cathode.

The apparatus of the present invention although similar to that apparatus described in the aforementioned article is characterised by a second circuit means, including a second voltage source, also connected to the electrodes for producing periodically a breakdown discharge between the electrodes.

In the accompanying drawings:

Fig. 1 is a schematic view showing an apparatus according to an embodiment of the present invention;

Fig. 2 is a diagram showing an example of impulse voltage wave in the apparatus shown in Fig. 1;

Fig. 3 is a diagram showing the voltage wave in the apparatus shown in Fig. 1;

Figs. 4 and 5 show combinations of electric field-concentrating electrodes which can replace those shown in Fig. 1; and

Fig. 6 is a diagram showing the discharge characteristics of deuterium gas.

Preferred embodiments of this invention will now be described and reference will be made to the aforementioned drawings. The description which follows is given by way of example only.

In the present invention, deuterium is stored in a solid-state storage member by placing the storage member in a deuterium gas atmosphere and generating a partial discharge in the deuterium gas atmosphere.

In the preferred embodiment of this method for generating heat energy by nuclear fusion reaction, a deuterium gas is introduced to fill the space between a negative electrode (cathode) composed of a deuterium solid-state storage material, e.g. a suitable metal, and another electrode (anode); and a first voltage, a dc voltage, is applied therebetween to concentrate electric field around the negative electrode so that a partial discharge can be generated at least around the negative electrode.

Deuterium storage in the storage member and heat generation can be carried out efficiently by carrying out both partial and breakdown discharge between the electrodes without resort to any reaction process in a solution.

The activation mechanism of deuterium and metals or alloys as deuterium storing materials has been extensively investigated, but has not fully been clarified yet. In general, it is presumed that deuterium forms deuterides with metals or alloys mainly through the following basic reaction steps:

(1) Physical adsorption of deuterium molecules onto the alloy surface,

(2) Dissociation of deuterium molecules and chemical adsorption of atomic-state deuterium,

(3) Permeation of deuterium atoms through the surface layers (i.e. permeation of deuterium atoms through the film formed on the metal or alloy surface and through the deuteride layer already formed thereon),

(4) Diffusion and dissolution of deuterium atoms into metals and alloys, and

(5) Precipitation of deuterides from a saturated deuterium solid solution, etc.

In case of deuterium storage by electrolysis of a heavy water solution, attachment of bubbles of deuterium to the negative electrode surface, etc. take place in these steps, inhibiting further adsorption of deuterium molecules to the alloy surface, etc., but in the present invention, no reaction is carried out in a solution and thus the surface of the deuterium storage member is not influenced by bubbles. That is, the storage of deuterium can be effectively carried out.

Furthermore, no oxygen is generated at the positive electrode even by discharging, and thus there is no danger of explosion by the reaction between oxygen and deuterium. Still furthermore, the deuterium gas is a good insulator as is well known, and thus a high voltage can be applied between the electrodes. That is, it is easy to ionize or radicalize the deuterium, and it is possible to accelerate the excited and charged deuterium toward the negative electrode to hit the storage member. The reaction can be efficiently occasioned, because the excited and charged deuterium can be accelerated much more in the gas phase than in the liquid phase. In the present invention, a partial discharge is generated between the two electrodes to activate the deuterium, thereby forming deuterium ions and deuterium radicals. As deuterium ions and deuterium radicals have an improved adsorption probability on the surface of the storage member, as compared with deuterium molecules, and thus occlusion deuterium into the deuterium storing alloy is promoted to increase the deuterium content in the deuterium storing member.

In case that a voltage is applied to the deuterium storage member, ionized and charged deuterium can be collected and accelerated, thereby impelling deuterium into the deuterium storage member. Thus, deuterium storage can be carried out more effectively.

In the preferred embodiment, cations $(H^2)^+$ of deuterium formed by discharge in the deuterium gas are attracted toward the negative electrode by the electric field and collected onto the deuterium storage member constituting the negative electrode to store the deuterium into the negative electrode, and then, or while storing the deuterium, a high electric field voltage is applied between both electrodes instantaneously to generate a discharge by the impulse wave voltage, thereby generating a breakdown discharge (which herein designates a discharge capable of forming a discharge passage allowing the plasma state to penetrate between the electrodes. The term "breakdown discharge" is intended to include spark discharge and disruptive discharge). The breakdown discharge not only raises parts of the negative electrode to a high temperature, but also generates impulse waves in the storage member constituting the negative electrode, thereby vigorously vibrating internal atoms (not only the atoms of the storage member matrix, but also deuterium atoms) instantaneously and generating lattice intrusion of deuterium into interstices in the lattice structure.

Lattice defects such as lattice holes, interstitial atoms, etc. are easily formed in the storage member constituting the negative electrode and the storage member can be hit by accelerated deuterium ions by generating the breakdown discharge, and thus many deuterium atoms can be made to intrude into these lattice defects to considerably shorten the distances between the deuterium atoms.

A cooling means can be used in contact with the storage member when storage is carried out, and thus it is possible to reduce temperature increase of the storage member during storage and much more deuterium therefore can be stored. Efficiency, thus, is further increased.

Though in general the amount of deuterium stored in the solid-state storage material depends upon the species of storage material, a volume of deuterium 700 to 1,000 times as large as that of the storage material can be stored therein. This proportion corresponds approximately to the volume reduction which occurs when a deuterium gas is liquefied.

As the solid-state storage material, simple metals such as Pd, Ca, Mg, Ti, Zr, V, Nb, Fe, etc., and alloys containing at least one of these metals can be used. Examples of alloys which can be used include Pb-based alloys, Mg-based alloys such as $Mg_2Cu$, $Mg_2Ni$, etc., Ti-based alloys such as TiFe, TiCo, TiMn, $TiCr_2$, etc. and Zr-based alloys such as $ZrMn_2$, etc. Furthermore, rare earth element alloys containing at least one of rare earth elements represented by La, Mm (misch metal), etc. can be used. For Example, La-Ni-based alloys such as $LaNi_5$, etc., and Mm-Ni-based alloys such as $CaMmNiA\ell$, etc. can be used.

The storage member can have any appropriate shape such as a sheet form, a rod form, a spherical form, a plate form, etc., and the shape is not limited to these forms. That is, any shape can be used, so long as it has a surface area large enough to efficiently carry out the deuterium storage. In order to allow deuterium atoms to efficiently intrude into the storage member to a sufficient depth, the entirety of the electrode constituted by the storage member or its surface may be formed from fine particles of deuterium storing materials as a layer by deposition according to a CVD process, etc.

The gas for use in the present invention, a deuterium gas, may contain a very small amount of light hydrogen and/or tritium.

As the pressure of the gas atmosphere, a high pressure is not particularly necessary. That is, a pressure such as the atmospheric pressure can be used. In other words, any pressure, under which partial and breakdown discharge can be effectively generated, can be used.

If the surface of the storage member is subjected to sputtering at least once in a deuterium atmosphere before the storage of deuterium into the storage member, thereby removing the adsorbed materials from the surface and giving damages to the regions near the surface at the same time to induce occurrence of defects, deuterium storage can be more effectively carried out. This is because, if there are defects on the surface of the storage member, the surface area is increased and the adsorption probability is enhanced thereby.

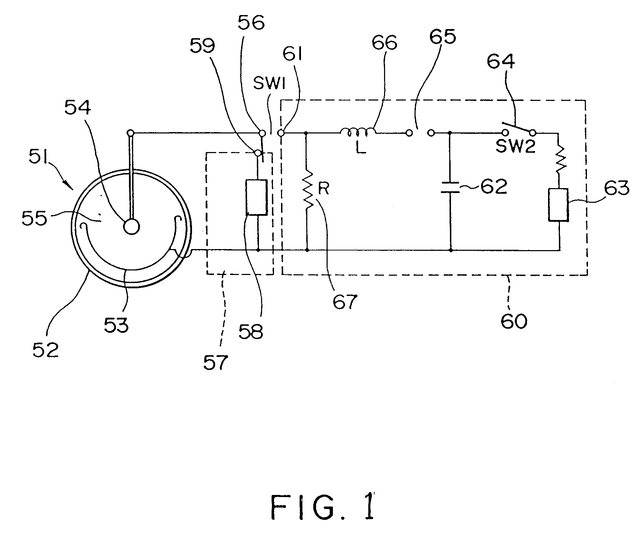

Fig. 1 is a schematic cross-sectional view showing one embodiment of a method for generating heat energy by nuclear fusion reaction, where numeral 51 is a vessel for generating heat energy, 52 a tight sealed vessel (chamber), 53 a positive electrode (anode), 54 a negative electrode (cathode) so constructed as to concentrate an electric field, 55 a deuterium gas, 56 a switch SW1 for selecting a voltage to be applied to the electrode 53 or 54, 57 a device for applying a unidirectional voltage, 58 a power source for applying the unidirectional voltage, 59 an output terminal of the device 57 for applying the unidirectional voltage, 60 a device for applying an impulse voltage, 61 an output terminal of the device for applying the impulse voltage, 62 a capacitor for storing electric energy, 63 a DC power source for storing the electric energy in the capacitor 62, 64 a switch SW2 for connecting or disconnecting the DC power source 63 to the capacitor 62 to store the electric energy in the capacitor 62, 65 a spark discharge gap for discharging the energy stored in the capacitor 62, 66 an inductance and 67 a discharge resistance.

5

A voltage, which is negative with respect to the positive electrode 53, is applied to the negative electrode 54 from the power source 58 for applying the unidirectional voltage, and the electric field intensity around the negative electrode 54 is higher than the electric field intensity that can start an ionization discharge (which means a corona discharge such as glow corona discharge, etc.), that is, in a partial discharge state, because the electric field is concentrated around the negative electrode 54.

Thus, the deuterium existing near the negative electrode 54 at higher than the electric field intensity that can start the ionization discharge is converted to cations, which are attracted by the electric field toward the negative electrode 54 constituted by the storage member and collected. The collected cations are converted to neutral atoms by the negative electrode 54 and stored in the negative electrode 54 constituted by the storage member. By increasing the discharge current per surface area of the negative electrode 54, the deuterium can be correspondingly efficiently stored in the storage member constituting the negative electrode 54 per unit time.

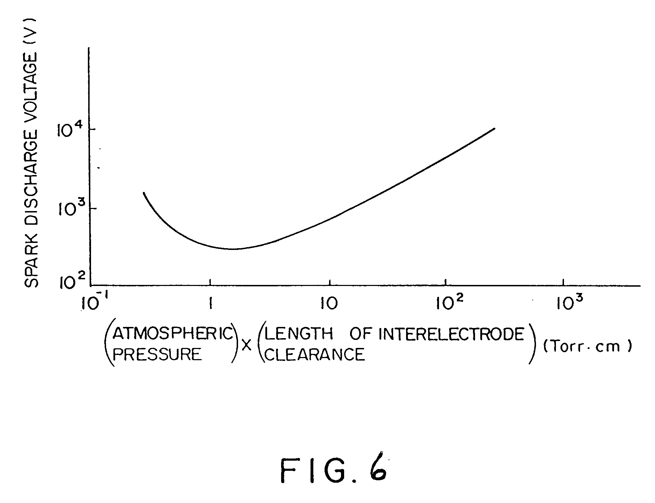

Fig. 6 shows the general discharge characteristics of a deuterium gas, where an electrical breakdown voltage is given against the multiplication product of atmospheric pressure between spherical electrodes in a deuterium gas by the length of interelectrode clearance. The electric field between the electrodes is substantially a uniform electric field. The discharge voltage shown in this figure is that voltage causing a spontaneous breakdown discharge (i.e. immediately, without generating any partial discharge, that is, the voltage at breakdown).

When the deuterium is sufficiently stored in the storage member constituting the negative electrode 54, heat energy can be generated.

After the deuterium is sufficiently stored in the storage member constituting the negative electrode 54, or in the process of storage, the switch (SW1) 56 may be turned off the output terminal 59 of the device 57 for applying the unidirectional voltage and connected to the output terminal 61 of the device 60 for applying the impulse voltage to apply an impulse voltage between the electrodes 53 and 54 from the device 60 for applying the impulse voltage. It is effective for increasing the efficiency to apply such a voltage at least once thereto.

In order to generate an impulse voltage, which is negative in respect to the positive electrode, at the output terminal 61 of the device 60 for applying the inpulse voltage, the switch (SW2) 64 is turned on to store electric energy in the capacitor 62 from the DC power source 63. After the charged voltage of the capacitor 62 reaches a desired voltage, the switch (SW2) 64 is turned off to discharge the electric energy stored in the capacitor 62, thereby make a discharge at the spark discharge gap 65 through the discharge resistance 67. At that time, an impulse voltage can be generated at both ends of the discharge resistance 67 and a impulse voltage, which is negative in respect to the positive electrode, can be generated at the output terminal 61 of the device for applying the impulse voltage. A discharge can be generated at the spark discharge gap 65 by shortening the gap length or by providing a known discharge trigger on the gap.

When the set voltage of the DC power source 63 is applied to the spark discharge gap 65 by elevating the set voltage to higher than the necessary intergap voltage for generating a discharge at the spark discharge gap 65 while keeping the switch (SW2) 64 on, the spark discharge gap 65 fails to hold insulation before the voltage at both ends of capacitor 62 reaches a set maximum voltage during the charging of capacitor 62, and generates a spark discharge. The electric energy stored in the capacitor 62 is thus discharged through the discharge resistance 67 instantaneously, then the electric energy is again stored in the capacitor 62 from the DC power source 63, and then the spark discharge gap 65 generates a discharge again. In this manner, charge and discharge can be automatically repeated.

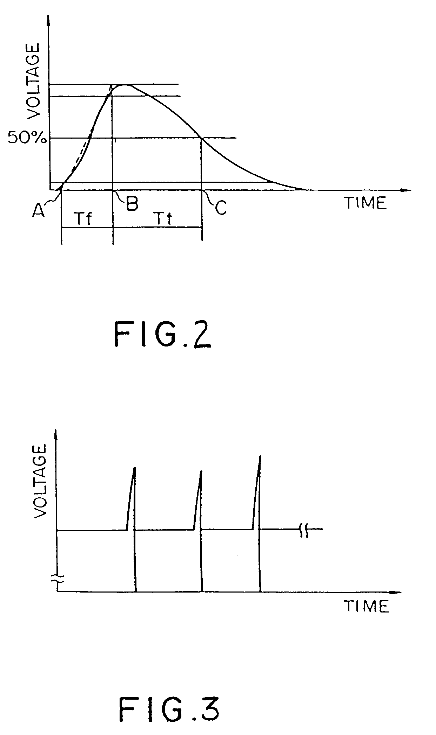

Fig. 2 shows an example of the wave form of the impulse voltage, more particularly an impulse voltage wave form in a load-free state.

The time between two points at which the straight line connecting a point, at which the rising region curve of the impulse voltage wave form is intersected with a straight line showing 10 % of the peak voltage value, to another point, at which the rising region curve is intersected with a straight line showing 90 % of the peak voltage value, is intersected with the straight lines showing 0 % and 100 % of the peak voltage value, respectively, that is, the time between points A and B is defined to be a duration of wave front $T_f$ of the impulse voltage wave form. The time between the point B and a point C (a point at which the rising region curve in the impulse wave form is intersected with the straight line showing 50 % of the peak voltage value) is defined to be a duration of wave tail $T_t$ of the impulse voltage wave form.

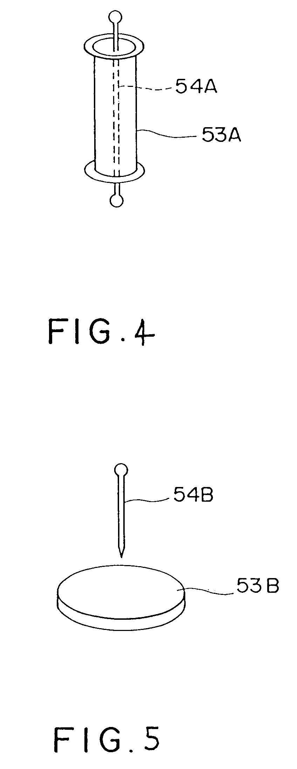

Combinations of electric field-concentrating electrodes so constructed as to concentrate the electric field in the present invention include combinations of electric field-concentrating electrodes as shown in Figs. 4 and 5 besides the combination of a spherical negative electrode and a round bowl-shaped positive electrode shown in Fig. 1.

Fig. 4 shows concentric cylindrical electrodes, where 54A is a negative electrode constituted by a linear storage member and 53A is a cylindrical positive electrode.

Fig. 5 shows an example of needle-flat plate electrodes, where 54B is a negative electrode constituted by a needle-like storage member and 53B is a flat plate-like positive electrode.

Needless to say, both electrodes 53A and 54A, and 53B and 54B shown in Figs. 4 and 5, respectively, are placed and fixed in a tightly sealed vessel 52 (see Fig. 1) of appropriately suitable shape for the shapes of the electrodes. Both electrodes 53A and 54A, and 53B and 54B are electrically insulated from the vessel 52 to sufficiently withstand an intense electric field in the same manner as shown in Fig. 1. Alternatively, the tightly sealed vessel 52 may be constituted by an electric insulator such as glass, etc.

The shapes of electric field-concentrating electrodes are not limited to the electrode shapes shown in Figs. 1, 4 and 5, and any shape can be used, so long as the electric field concentration can be made at least on the negative electrode. Besides the negative electrode, the electric field concentration may be made also on the positive electrode as on the negative electrode. In that case, combinations of, for example, needle-like electrode-needle-like electrode have a good effect, and a polarity-reversing pulse voltage and an AC voltage can be applied while using an electrode or electrodes constituted by a storage member as one or both of the electrodes.

A DC voltage and an impulse voltage are alternately applied in the apparatus shown in Fig. 1 in the following manner.

Fig. 3 shows one example of voltages applied between the positive electrode 53 and the negative electrode 54 at that time.

While the capacitor 62 as the constituent member of the device 60 for applying the impulse voltage is charged from the DC power source 63, a unidirectional voltage is applied between both electrodes 53 and 54 from the device 57 for applying the unidirectional voltage by connecting the negative electrode 54 to the output terminal 59 by the switch (SW1) 56. Just before discharging the electric energy stored in the capacitor 62 through the spark discharge gap 65, both electrodes 53 and 54 are made off the output terminal 59 of the device 57 for applying the unidirectional voltage by the switch (SW1) 56 and connected to the output terminal 61 of the device 60 for applying the impulse voltage, thereby applying the impulse voltage between the negative electrode 54 and the positive electrode 53 to make a discharge. In this manner, the DC voltage and the impulse voltage are alternately applied to the electrodes by alternately switching the switch (SW1) 56.

Example

Cases of generating heat energy under various conditions in the apparatus shown in Fig. 1 are given below.

The following individual combinations of electrode shapes were used.

(1) An electrode combination of an semi-spherical outside electrode having a radius of 10 cm as a positive electrode with a spherical electrode (negative electrode) having a radius of 5 mm or 10 mm provided at the centre of curvature of the outside electrode so as to concentrate the electric field onto the spherical negative electrode, and

(2) An electrode combination of a cylindrical outside electrode having a radius of 2.5 cm as a positive electrode with a linear electrode (negative electrode) having a radius of 0.4 mm or 1.0 mm provided at the centre of the cylinder so as to concentrate the electric field onto the linear negative electrode.

Material for all of the positive electrodes was brass, whereas materials for the negative electrodes constituting the storage members were either a bulk deuterium storage material or moulded products of its powder with copper (Cu) as a binder. As the deuterium storage materials, palladium (Pd) metal and CaMmNiAℓ in a ratio of 0.75 : 0.25 : 4.45 : 0.55 In Table 1, (alloy)* means this alloy of CaMmNiAℓ and (Pd)* means an electrode moulded from Pd powder with Cu as a binder (25 % by volume).

As the deuterium gas pressure, $1.3 \times 10^4$ Pa (100 Torr), which was lower than the atmospheric pressure and $1.3 \times 10^5$ Pa (1,000 Torr), which was higher than the atmospheric pressure, were used in the test. Any DC voltage, which was capable of producing the unidirectional electric field could be applied between the electrodes, and could have a pulse component. Furthermore, the applied voltage could be any voltage higher than the voltage that started a partial discharge around the electric field-concentrated negative electrode.

The impulse voltage in Table 1 was an impulse voltage having a voltage wave form having a duration of wave front $T_f$ = 1 microsecond and a duration of wave tail $T_t$ = 40 microseconds as already defined before. The following individual timings of applying the impulse voltage were tried.

(1) A case of applying a DC voltage to collect and store the deuterium into the negative electrode constituted by the storage member without applying an impulse voltage,

(2) A case of applying an impulse voltage at intervals of 10 minutes, while applying a DC voltage to collect and store the deuterium into the negative electrode constituted by the storage member,

(3) A case of applying an impulse voltage at intervals of one minute, while applying a DC voltage to collect and store the deuterium into the negative electrode constituted by the storage member, and

(4) A case of applying an impulse voltage at an interval of 1 msec about 10 times in each interval of 10 minutes while applying a DC voltage to collect and store the deuterium into the negative electrode constituted by the storage member.

For the peak value of the applied impulse voltage, a voltage capable of discharging while forming a discharge passage between the negative electrode and the positive electrode with a sufficiently high probability (generating a breakdown discharge) was selected and applied. In that case, needless to say, a breakdown was reached in the midway of the applied impulse voltage wave form. Thus, the voltage wave form took a voltage wave form cut off in the midway at that time.

Under the foregoing conditions at first a discharge was generated between the electrodes in the deuterium gas to store the deuterium in the storage member as an initial state before generating heat energy.

The initial state may be brought about by using a storage member, which has already stored deuterium according to other procedure, as the negative electrode in a tightly sealed vessel and then by filling a deuterium gas in the tightly sealed vessel.

Then, partial discharge and breakdown discharge were generated repeatedly between the electrodes under the conditions given above, and also in Table 1, to generate heat energy.

Table 1

| Combination of electrode shapes | Positive electrode Radius R (cm) (material) | Negative electrode Radius r (mm) (material) | Deuterium gas pressure (Torr) † | DC voltage applied between electrodes kV | Impulse voltage peak value kV | Impulse voltage application timing | Multiplied heat output evaluation |
|---|---|---|---|---|---|---|---|
| Semi-sphere versus sphere (electric field-concentrating negative electrode) | R = 10 cm (Brass) | 5 (Pd) | 1000 | 30 | 0 | no application | △ |
| | | | 1000 | 30 | 170 | every 10 minutes | ○ |
| | | | 1000 | 30 | 170 | every 10 minutes* | ◎ |
| | | | 1000 | 30 | 170 | every 1 minute | ◎ |
| | | | 100 | 8 | 0 | no application | △ |
| | | | 100 | 8 | 35 | every 10 minutes | ○ |
| | | | 100 | 8 | 35 | every 1 minute | ◎ |
| | | 10 (Pd) | 1000 | 50 | 160 | every 10 minutes | ○ |
| | | | 1000 | 50 | 160 | every 1 minute | ◎ |
| | | | 100 | 12 | 30 | every 10 minutes | ○ |
| | | | 100 | 12 | 30 | every 10 minutes* | ◎ |
| | | | 100 | 12 | 30 | every 1 minute | ◎ |
| | | 10 (Alloy)* | 1000 | 50 | 160 | every 1 minute | ○ |
| | | 10 (Pd)* | 1000 | 50 | 160 | every 1 minute | ○ |

† 1 Torr ≡ $1.3 \times 10^2$ Pa

(To be continued)

| Combination of electrode shapes | Positive electrode Radius R (cm) (material) | Negative electrode Radius r (mm) (material) | Deuterium gas pressure (Torr) † | DC voltage applied between the electrodes kV | Impulse voltage peak value kV | Impulse voltage application timing | Multiplied heat output evaluation |
|---|---|---|---|---|---|---|---|
| Cylinder versus linear (electric field-concentrating negative electrode) | 2.5 (Brass) | 0.4 (Pd) | 1000 | 15 | 0 | no application | △ |
|  |  |  | 1000 | 15 | 60 | every 10 minutes | ○ |
|  |  |  | 1000 | 15 | 60 | every 1 minute | ◎ |
|  |  |  | 100 | 6 | 0 | no application | △ |
|  |  |  | 100 | 6 | 25 | every 10 minutes | ○ |
|  |  |  | 100 | 6 | 25 | every 1 minute | ◎ |
|  |  | 1.0 (Pd) | 1000 | 12 | 50 | every 10 minutes | ○ |
|  |  |  | 1000 | 12 | 50 | every 1 minute | ◎ |
|  |  |  | 100 | 4 | 20 | every 10 minutes | ○ |
|  |  |  | 100 | 4 | 20 | every 1 minute | ◎ |

(Alloy)* means an alloy of CaMmNiAℓ in a ratio of 0.71 : 0.25 : 4.45 : 0.55

(Pd)* means an electrode molded from Pd powder with Cu as a binder

Every 10 minutes* means application of the voltage at every 1 msec about 10 times at every 10 minutes

† 1 Torr ≡ 1.3 x 10$^2$ Pa.

Evaluation of heat output multiplied at the two electrodes in the individual tests are shown in the rightest column in Table 1. When hydrogen non-storing material was used as the material of electric field-concentrated negative electrode, no more heat energy than the electric energy consumed at the two electrodes was generated, whereas when a deuterium storage material was used as the material of the negative electrode, more heat energy than the electric energy consumed at the two electrodes was

10

generated at the negative electrode.

A larger quantity of heat energy was generated when the bulk state deuterium storage metal (Pd) was used as the material for the negative electrode than when the deuterium storage alloy CaMmNiAℓ was used as the material for the negative electrode or than when the material molded from the powder of deuterium storage material with Cu as a binder was used as the material for the negative electrode. Furthermore, a larger quantity of heat energy was generated when the impulse voltage was applied or when the impulse voltage was applied at one minute intervals than when applied at 10 minute intervals. More heat energy than the electric energy consumed at the two electrodes could be generated when the impulse voltage was applied at shorter intervals. Furthermore, a larger quantity of heat energy could be generated when the impulse voltage was applied a plurality of times than when applied once every 10 minutes.

An impulse voltage of $T_f$ = 0.6 microseconds and $T_t$ = 25 microseconds was used as the impulse voltage wave form besides that shown in Table 1, but the effect was not so different from that when the impulse voltage wave form of Table 1 was used.

The generated heat energy was substatially proportional to the application time of applied DC voltage (voltage capable of producing a unidirectional electric field), that is, to the amount of stored deuterium and also substantially proportional to the number of applications of impulse voltage, and thus the control of output heat energy can be controlled by controlling these factors.

Deuterium can be efficiently stored in the storage member at a high concentration under a relatively low gas pressure from approximately the atmospheric pressure to a few atmospheres as well as under a high gas pressure without using a low temperature.

The voltage applied to the storage member can be freely adjusted and the storage member can be cooled, and thus heat generation can be efficiently carried out safely, economically, and relatively easily.

A method capable of generating a large quantity of heat energy for practical application with good controllability against less input electrical energy can be provided.

## Claims

1. A method for generating heat energy, which method comprises:

   providing a chamber (52) having therein a pair of spaced electrodes (53,54) which electrodes (53,54) are so configured that electric field may be concentrated around at least one electrode (54) thereof, and which one electrode (54) constitutes a deuterium storage member;

   admitting either deuterium gas, or a gaseous mixture predominantly of deuterium gas, into said chamber (52);

   applying a first voltage between said electrodes (53,54) to concentrate an electric field around said one electrode (54) and thereby produce a sustained partial discharge whereby said deuterium gas is activated and activated deuterium is adsorbed by said one electrode (54);

   which method is characterised by:

   applying a pulsed second voltage between said electrodes (53,54), periodically, whereby a breakdown discharge is caused to occur in each period of said pulsed second voltage, alternate with said sustained partial discharge, whereby impulse waves are generated in said one electrode (54), and lattice intrusion of deuterium into interstices of the lattice structure of said one electrode (54) is caused.

2. A method as claimed in claim 1 wherein a dc voltage is applied as said first voltage between said electrodes (53,54), and is such that said one electrode (54) is at a negative voltage.

3. A method as claimed in claim 2 wherein said pulsed second voltage is applied at 1 minute intervals.

4. A method as claimed in claim 2 wherein said pulsed second voltage is applied at 10 minute intervals.

5. A method as claimed in claim 2 wherein said pulsed second voltage comprises a train of pulses applied each period.

6. A method as claimed in claim 5 wherein said pulsed second voltage comprises a train of 10 pulses, each pulse at a 1 ms interval, each train at a 10 minute interval.

7. A method as claimed in any preceding claim wherein heat energy output is controlled by controlling the period of said pulsed second voltage.

8. A method as claimed in claim 2 wherein heat energy output is controlled by controlling the application time of the applied dc voltage.

9. A method as claimed in claim 5 wherein heat energy output is controlled by controlling the number of pulses in each pulse train.

10. A method as claimed in any preceding claim including, as a preliminary step, a step of pretreating said deuterium storage member by removing surface adsorbed material and damaging the surface thereof.

11. A method as claimed in claim 10 wherein said step of pretreating said deuterium storage member is performed by sputtering in a deuterium atmosphere.

12. Apparatus for generating heat energy, which apparatus comprises:
    a chamber (52) having a gas inlet and a gas outlet;
    a pair of spaced electrodes (53,54) which electrodes (53,54) are so configured that electric field may be concentrated around at least one electrode (54) thereof, and which one electrode constitutes a deuterium storage member; and
    a first circuit means (56 to 59), including a first voltage source (58) connected to said electrodes (53,54) for concentrating electric field around said one electrode (54) and producing a sustained partial discharge between said electrodes (53,54);
    which apparatus is characterised by:
    a second circuit means (61 to 67), including a second voltage source (63), also connected to said electrodes (53,54) for producing periodically a breakdown discharge between said electrodes (53,54).

13. Apparatus as claimed in claim 12 including cooling means for cooling said one electrode (54).

14. Apparatus as claimed in claim 12 wherein said one electrode (54) comprises powdered and moulded deuterium storage material.

15. Apparatus as claimed in claim 12 wherein said one electrode (54) and the other electrode (53) are inner and outer concentric spherical and hemispherical electrodes respectively.

16. Apparatus as claimed in claim 12 wherein said one electrode (54) and the other electrode (53) are inner and outer coaxial linear and cylindrical electrodes, respectively.

17. Apparatus as claimed in claim 12 wherein said one electrode (54) is needle-like.

18. Apparatus as claimed in any preceding claim 12 to 17 wherein said one electrode (54) is of Pd.

**Patentansprüche**

1. Verfahren zum Erzeugen von Wärmeenergie, mit folgenden Verfahrensschritten:
    Zur-Verfügung-Stellen einer Kammer (52), die innen ein Paar beabstandeter Elektroden (53, 54) enthält, die so ausgelegt sind, daß ein elektrisches Feld um wenigstens eine aus einem Deuterium-Speicherglied bestehenden Elektrode (54) konzentriert wird;
    Einführen von Deuteriumgas oder einer gasförmigen Mischung, in der Deuteriumgas vorherrscht, in die Kammer (52);
    Anlegen einer ersten Spannung an die Elektroden (53, 54) zur Konzentration eines elektrischen Feldes um die eine Elektrode (54) und zur dadurch bedingten Erzeugung einer anhaltenden Teilentladung, durch die das Deuteriumgas aktiviert wird und durch die das aktivierte Deuterium von der einen Elektrode (54) adsorbiert wird;
    **gekennzeichnet durch** den Verfahrensschritt:
    periodisches Anlegen einer gepulsten zweiten Spannung an die Elektroden (53, 54), wodurch eine Durchschlagsenentladung ausgelöst wird, die in jeder Periode der gepulsten zweiten Spannung im Wechsel mit der anhaltenden Teilentladung auftritt, wodurch in der einen Elektrode (54) Impulswellen erzeugt werden und ein Deuteriumgitter-Eindringen in Zwischengitter der Gitterstruktur der einen Elektrode (54) bewirkt wird.

**2.** Verfahren nach Anspruch 1, bei dem die als erste an die Elektroden (53, 54) angelegte Spannung eine derart gepolte Gleichspannung ist, bei der die eine Elektrode (54) eine negative Spannung führt.

**3.** Verfahren nach Anspruch 2, bei dem die gepulste, zweite Spannung in 1-Minuten-Intervallen angelegt wird.

**4.** Verfahren nach Anspruch 2, bei dem die gepulste zweite Spannung in 10-Minuten-Intervallen angelegt wird.

**5.** Verfahren nach Anspruch 2, bei dem die zweite Spannung einen Impulszug enthält, der in jeder Periode angelegt wird.

**6.** Verfahren nach Anspruch 5, bei dem die gepulste zweite Spannung einen Impulszug von 10 Impulsen enthält, von denen jeder Impuls in einem 1-ms-Intervall und jeder Impulszug in einem 10-Minuten-Intervall auftritt.

**7.** Verfahren nach einem der vorstehenden Ansprüche, bei dem die abgegebene Wärmeenergie durch die Anzahl der Impulse eines jeden Impulszuges gesteuert wird.

**8.** Verfahren nach Anspruch 2, bei dem die Wärmeenergieabgabe durch Steuerung der Anlegezeit der angelegten Gleichspannung gesteuert wird.

**9.** Verfahren nach Anspruch 5, bei dem die Abgabe der Wärmeenergie durch die Anzahl der Impulse eines jeden Impulszuges gesteuert wird.

**10.** Verfahren nach einem der vorstehenden Ansprüche, mit dem vorläufigen Verfahrensschritt der Vorbehandlung des Deutoriumspeichergliedes durch Entfernung oberflächenadsorbierten Materials und durch Beschädigung dessen Oberfläche.

**11.** Verfahren nach Anspruch 10, bei dem der Schritt der Vorbehandlung des Deuteriumspeichergliedes durch Sputtern in einer Deuteriumatmosphäre ausgeführt wird.

**12.** Apparat zur Erzeugung von Wärmeenergie, mit:
einer Kammer (52) mit einem Gaseinlaß und einem Gasauslaß;
einem Paar beabstandeter Elektroden (53, 54), die so gestaltet sind, daß ein elektrisches Feld um wenigstens eine Elektrode (54) dieser konzentriert wird, und wobei diese Elektrode ein Deuteriumspeicherglied bildet; und mit
einem ersten Schaltungsmittel (56 - 59) mit einer ersten Spannungsquelle (58), die mit den Elektroden (53, 54) verbunden ist zur Konzentration des elektrischen Feldes um die eine Elektrode (54) und zur Erzeugung einer anhaltenden Teilentladung zwischen den Elektroden (53, 54);
**gekennzeichnet durch:**
ein zweites Schaltungsmittel (61 - 67) mit einer zweiten Spannungsquelle (63), die ebenfalls mit den Elektroden (53, 54) zur Erzeugung einer periodischen Durchschlagsentladung zwischen den Elektroden (53, 54) verbunden ist.

**13.** Apparat nach Anspruch 12, der mit einem Kühlmittel zur Kühlung der einen Elektrode (54) ausgestattet ist.

**14.** Apparat nach Anspruch 12, dessen eine Elektrode (54) puderförmiges, gepreßtes Deuteriumspeichermaterial enthält.

**15.** Apparat nach Anspruch 12, dessen eine Elektrode (54) und dessen andere Elektrode (53) jeweils innen und außen befindliche konzentrische, sphärische bzw. hemisphärische Elektroden sind.

**16.** Apparat nach Anspruch 12, dessen eine Elektrode (54) und dessen andere Elektrode (53) jeweils innen und außen befindliche geradlinige bzw. zylindrische Elektroden sind.

**17.** Apparat nach Anspruch 12, dessen eine Elektrode (54) nadelförmig ist.

**18.** Apparat nach einem der vorstehenden Ansprüche 12 bis 17, dessen eine Elektrode (54) aus Pd besteht.

**Revendications**

1.  Procédé pour la production d'énergie thermique, lequel procédé comprend :
    l'utilisation d'une chambre (52) renfermant une paire d'électrodes espacées (53, 54), lesquelles électrodes (53, 54) sont configurées de manière qu'un champ électrique puisse être concentré autour d'au moins l'une (54) de ces électrodes, laquelle électrode (54) constitue un élément d'emmagasinage de deutérium ;
    l'admission soit de deutérium gazeux, soit d'un mélange gazeux principalement de deutérium gazeux, dans ladite chambre (52) ;
    l'application d'une première tension entre lesdites électrodes (53, 54) pour concentrer un champ électrique autour de ladite électrode (54) et produire ainsi une décharge partielle entretenue grâce à quoi ledit deutérium gazeux est activé et le deutérium activé est adsorbé par ladite électrode (54) ;
    lequel procédé est caractérisé par :
    l'application d'une seconde tension pulsée entre lesdites électrodes (53, 54), périodiquement, de façon à provoquer l'apparition d'une décharge disruptive dans chaque période de ladite seconde tension pulsée, en alternance avec ladite décharge partielle entretenue, grâce à quoi des ondes à impulsions sont générées dans ladite électrode (54) et une intrusion en réseau du deutérium dans des interstices de la structure en réseau de ladite électrode (54) se produit.

2.  Procédé selon la revendication 1, dans lequel une tension continue est appliquée en tant que ladite première tension entre lesdites électrodes (53, 54), et est telle que ladite électrode (54) est à une tension négative.

3.  Procédé selon la revendication 2, dans lequel ladite seconde tension pulsée est appliquée à intervalles d'une minute.

4.  Procédé selon la revendication 2, dans lequel ladite seconde tension pulsée est appliquée à intervalle de 10 minutes.

5.  Procédé selon la revendication 2, dans lequel ladite seconde tension pulsée Comprend un train d'impulsions appliqué à chaque période.

6.  Procédé selon la revendication 5, dans lequel ladite seconde tension pulsée comprend un train de 10 impulsions, les impulsions étant à intervalle de 1 ms et les trains étant à intervalle de 10 minutes.

7.  Procédé selon l'une quelconque des revendications précédentes, dans lequel l'énergie thermique produite est régulée par une régulation de la période de ladite seconde tension pulsée.

8.  Procédé selon la revendication 2, dans lequel l'énergie thermique produite est régulée par une régulation du temps d'application de la tension continue appliquée.

9.  Procédé selon la revendication 5, dans lequel l'énergie thermique produite est régulée par une régulation du nombre d'impulsions dans chaque train d'impulsions.

10. Procédé selon l'une quelconque des revendications précédentes, comprenant, en tant qu'étape préliminaire, une étape de prétraitement dudit élément d'emmagasinage du deutérium par élimination de la matière absorbée en surface et détérioration de sa surface.

11. Procédé selon la revendication 10, dans lequel ladite étape de prétraitement dudit élément d'emmagasinage de deutérium est effectuée par une pulvérisation dans une atmosphère de deutérium.

12. Appareil pour la production d'énergie thermique, lequel appareil comporte :
    une chambre (52) ayant une entrée de gaz et une sortie de gaz ;
    une paire d'électrodes espacées (53, 54), lesquelles électrodes (53, 54) sont configurées de manière qu'un champ électrique puisse être concentré autour d'au moins l'une (54) de ces électrodes, laquelle électrode constitue un élément d'emmagasinage de deutérium ; et

des premiers moyens à circuit (56 à 59) comprenant une première source de tension (58) connectée auxdites électrodes (53, 54) pour concentrer un champ électrique autour de ladite électrode (54) et produire une décharge partielle entretenue entre lesdites électrodes (53, 54) ;

lequel appareil est caractérisé par :

des seconds moyens à circuit (61 à 67) comprenant une seconde source (63) de tension, également connectée auxdites électrodes (53, 54), pour produire périodiquement une décharge disruptive entre lesdites électrodes (53, 54).

13. Appareil selon la revendication 12, comprenant des moyens de refroidissement destinés à refroidir ladite électrode (54).

14. Appareil selon la revendication 12, dans lequel ladite électrode (54) comprend une matière en poudre moulée d'emmagasinage du deutérium.

15. Appareil selon la revendication 12, dans lequel ladite électrode (54) et l'autre électrode (53) sont respectivement des électrodes, sphérique et hémisphérique concentriques, intérieure et extérieure.

16. Appareil selon la revendication 12, dans lequel ladite électrode (54) et l'autre électrode (53) sont respectivement des électrodes linéaire et cylindrique coaxiales, intérieure et extérieure.

17. Appareil selon la revendication 12, dans lequel ladite électrode (54) est analogue à une aiguille.

18. Appareil selon l'une quelconque des revendications 12 à 17, dans laquelle ladite électrode (54) est en Pd.

FIG. 1

FIG.2

FIG.3

54A

53A

FIG.4

54B

53B

FIG.5

EP 0 414 399 B1

FIG. 6

19